# EUROPEAN PATENT APPLICATION

(11) **EP 1 643 403 A1**
(43) Date of publication of application: **05.04.2006**
(21) Application number: 05021646.4
(22) Date of filing: 04.10.2005
(51) Int. Cl.: G06F 21/00

(54) **Encryption system using device authentication keys**

(30) Priority: 01.10.2004 JP 2004290432
(71) Applicant: Fukaya, Hiromi, Ageo-shi Saitama 362-0001 (JP)
(72) Inventor: Fukaya, Hiromi, Ageo-shi Saitama 362-0001 (JP)
(74) Representative: Grünecker, Kinkeldey, Stockmair & Schwanhäusser Anwaltssozietät

(57) **Abstract**

An encrypted data distributing method includes preparing cipher text which can be decrypted only by a specific trusted device, and performing encryption and decryption processing at a high speed. An encryption key is prepared using an encryption device authentication key unique to an encryption device and a decryption device authentication key unique to a decryption device, and cipher text is prepared by this encryption key. The authentication keys are also sent to the decryption device. In the decryption device, the decryption device authentication key received from the encryption device is compared with the decryption device authentication key prepared by the decryption device to perform decryption processing only when the authentication keys match.

## Description

### BACKGROUND OF THE INVENTION

### Field of the Invention:

The present invention relates to an encryption system using device authentication keys, and more particularly, to an encrypted data distributing method in which plaintext data is encrypted so that the encrypted data can be decrypted only in a specific decryption device. Furthermore, the present invention relates to an encryption device, a decryption device, an encryption program and a decryption program for use in this encrypted data distributing method.

### Description of the Related Art:

With development of information transmitting systems represented by the Internet, data has been broadly transmitted and received via a communication network. Accompanying this, various data encryption systems have been proposed in order to prevent information leakage, tampering, spoofing or the like. In a common shared key encryption system, an encryption key to encrypt plain text and a decryption key to decrypt cipher text into the original plain text are constituted as the same common key. Since an encryption algorithm and a decryption algorithm have symmetry, encryption and decryption processing speeds are superior. However, the "key" needs to be distributed to a receiver side in advance using any method. If the secret "key" is leaked, there is a serious problem that any cryptographs may be deciphered by the third party. Moreover, when there are a large number of partners to receive the respective encrypted data, it is necessary to prepare as many secret shared keys as there are receiving partners.

In recent years, a public key cryptograph system has been broadly used in which encryption and decryption are performed by means of a pair of two different types of public key and private key. In this system, the sender encrypts plaintext data using a receiver's public key to prepare the cipher text and sends the same to the receiver. The receiver decrypts the sent cipher text using his confidential private key. Others who do not have this private key cannot decipher this cipher text. If one public key is thrown open to public, anyone can use the public key. Even when one communicates with a large number of partners, one's own private key only may be managed which is desirable because the management of the key is not laborious. However, since the encryption algorithm is asymmetrical to the decryption algorithm, and mathematically difficult processing increases, it is difficult to perform high-speed processing. Therefore, there has been a problem that the system is not suitable for a case where a content encrypted on the network is required to be sent to a receiver and decrypted in real time, or a case where the amount of data is very large. Especially in a portable terminal with a limited memory capacity, there is a problem that it is difficult to obtain a sufficient processing speed.

### BRIEF SUMMARY OF THE INVENTION

It is desirable to provide an encrypted data distributing method capable of preparing cipher text which can be decrypted only by a specific partner apparatus, and performing encryption/decryption processing at a high speed.

Moreover, it is desirable to provide an encryption device for use in this encrypted data distributing method, and a third object is to provide a decryption device for use in this encrypted data distributing method. Furthermore, it is desirable to provide an encryption computer program for use in this encrypted data distributing method, and it is desirable to provide a decryption computer program for use in the encrypted data distributing method.

The present invention comprises an encrypted data distributing method in which plain text is encrypted and allowed to be decrypted only by a specific decryption device. The method includes providing an encryption device authentication key unique to an encryption device prepared by use of a unique identification (ID) of the encryption device and providing a decryption device authentication key unique to the specific decryption device prepared by use of a unique ID of the decryption device. In the encryption device, an encryption key is prepared by use of the encryption device authentication key and the decryption device authentication key. Plain text data is encrypted by the encryption key in the encryption device, and the resultant cipher text is sent to the decryption device together with attribute information, the attribute information including the encryption device authentication key and the decryption device authentication key. In the decryption device, the decryption device authentication key received from the encryption device is compared with the decryption device authentication key prepared in the decryption device. When the decryption device authentication keys match, a decryption key is prepared by use of the encryption device authentication key and the decryption device authentication key. The cipher text is then converted into the plain text data by use of the decryption key.

The present invention also comprises an encrypted data distributing method. The encryption key to encrypt the plain text data is constituted to be the same as and common to the decryption key to decrypt the cipher text into the original plain text. Since an encryption engine is symmetrical to a decryption engine, high-speed processing can be performed. Additionally, the encryption key is by combining a unique authentication key unique to the encryption device with a unique authentication key unique to the decryption device on the receiving side. In the decryption device, the decryption key is anew in the decryption device by use of the encryption device authentication key and the decryption device authentication key contained in the attribute information (attached as, for example, a header attached to the received cipher text) to decrypt or decode the cipher text with this decryption key. In this case, the decryption device authentication key which must be originally owned by the decryption device is prepared anew, and this key is compared with the decryption device authentication key attached to the received cipher text. When the decryption device authentication keys do not match, the decryption key is prevented from being prepared. As a result, even if the cipher text and the attached attribute information leak, the device authentication key prepared by a device other than the target decryption device does not agree with or match the authentication key contained in the attached attribute information. Therefore, the cipher text cannot be decrypted by anyone other than the target partner device. This ensures the secure distribution of the encrypted data can be decrypted only by the particular decryption device on the target side.

The authentication keys (i.e., encryption and decryption device authentication keys) are prepared using the unique ID or identification information inherent or intrinsic in the device, and it is preferable to use a unique identification code (i.e., a globally unique ID or unique identifier) such as a manufacture or product number written in a central processing unit (CPU) itself. An integrated circuit (IC) such as the CPU and a network apparatus have apparatus identification IDs for recognizing each other, and it is possible to prepare the authentication key of the apparatus by use of these IDs as the unique IDs.

During preparation of the encryption key, the encryption device authentication key is combined with the decryption device authentication key to prepare an irreversible pseudo-random number, and the encryption key can be prepared using this pseudo-random number. In this case, the decryption device combines the encryption device authentication key with the decryption device authentication key to prepare the irreversible pseudo-random number, and prepares the decryption key using this pseudo-random number.

The encryption key may be prepared by the combining of the encryption and decryption device authentication keys with a password input by a user. In this case, a password input by a user on a decryption side is combined with both authentication keys to prepare the decryption key.

To prepare the encryption key, a secret and private group key may be combined to specify a group to which the user on the encrypted side and the user on the decryption side belong. In this case, unless the group key stored in the decryption device matches or agrees the group key of the encryption devices, the prepared decryption key differs from the encryption key, and therefore, the cipher text cannot be decrypted. Consequently, it is possible to distribute, transmit and receive the encrypted data only among the devices which belong to the same group.

When the key shared by the user (device) on the encryption side and the user (device) on the decryption side is used, this shared key may be further combined with a random number to prepare the encryption key. In this case, the random number is included in the attribute information, and is sent to the decryption device. The decryption device combines the provided random number with the shared key owned by the decryption device to prepare the decryption key.

The encryption device and the decryption device can be a computer or other terminal which can transmit and receive the data with respect to each other via the communication network, or either or both of the devices may be used as a network server. The cipher text and the attribute information are distributed from the encryption device (e.g., a server) to the decryption device (e.g., a client terminal) via the communication network. Consequently, the cipher text obtained by encrypting a content can be distributed as the encrypted data which can be decrypted only by the particular client terminal.

In another aspect, embodiments of the present invention comprise an encryption device which encrypts plain text to prepare cipher text that is only allowed to be decrypted by a specific decryption device. The encryption device includes an encryption device authentication key preparing means for preparing an encryption device authentication key unique to the encryption device by use of a unique ID of the encryption device, an encryption key preparing means for preparing an encryption key by use of the encryption device authentication key and a decryption device authentication key of the specific decryption device and an encryption engine that converts the plain text into the cipher text by use of the encryption key. The decryption device authentication key is unique to the decryption device and is prepared using a unique ID of the decryption device.

One preferred embodiment includes attribute information adding means for adding to the cipher text attribute information including the encryption device authentication key and the decryption device authentication key. When the encryption key preparing means further comprises a pseudo-random number preparing engine which combines the encryption device authentication key with the decryption device authentication key to prepare an irreversible pseudo-random number, the encryption key is prepared using the prepared pseudo-random number. Thus, a more complicated and secure encryption key can be obtained.

Since the encryption device authentication key prepared once is not changed, instead of the encryption device authentication key preparing means, there may be disposed encryption device authentication key storage means in which the encryption device authentication key prepared beforehand is stored.

This encryption device may be implemented as an external encryption device detachably coupled to a user's terminal device, and each constituting means may be a computer program in a storage medium such as a universal serial bus (USB) memory, a secure digital (SD) memory, an IC card or the like. With such an arrangement, when the user detaches the external encryption device from the user's terminal device, others can be prevented from being allowed to masquerade as the user and perform the data transmission/reception by use of the user's terminal. When the user attaches the user's external encryption device to a terminal device installed in a place where the user is staying, the data can be encrypted.

Moreover, the encryption device authentication key preparing (or storage) means, the encryption key preparing means and the encryption engine of the encryption device may be implemented as the integrated circuit (i.e., an LSI or the like) as a logical circuit, and the unique ID for use in preparing the authentication key may be the manufacture or product number of the integrated circuit or the identification information inherent or intrinsic in the integrated circuit. These means may be implemented as computer programs.

Furthermore, the present invention comprises a decryption device that receives cipher text and attribute information from a specific encryption device and decrypts the cipher text. The cipher text is prepared by an encryption key which is prepared using an encryption device authentication key unique to the specific encryption device and a decryption device authentication key unique to the decryption device. The attribute information includes the encryption device authentication key and the decryption device authentication key used in preparing the encryption key by the encryption device. The decryption device includes decryption device authentication key preparing means for preparing the decryption device authentication key unique to the decryption device by use of a unique ID of the decryption device and attribute information reading means for reading, from the attribute information, the encryption device authentication key and the decryption device authentication key used in preparing the encryption key in the encryption device. The decryption device also includes authentication key comparing means for judging whether or not the decryption device authentication key read by the attribute information reading means matches or agrees with the decryption device authentication key prepared by the decryption device authentication key preparing means, decryption key preparing means for preparing a decryption key by use of the encryption device authentication key and the decryption device authentication key and a decryption engine that converts the cipher text into plain text by use of the decryption key. The authentication key comparing means prohibits the decryption engine from being started when the decryption device authentication key attached to the cipher text does not match or agree with the decryption device authentication key prepared by the decryption device authentication key preparing means.

The decryption device authentication key used in the encryption device has been notified from the decryption device in advance or has been already open to the public. Therefore, this key must be the same as the authentication key originally prepared by the decryption device, and a correct decryption device can be decrypted the cipher text. However, even if the others peep at this cipher text and the attribute information and try to decrypt the cipher text, the cipher text cannot be decrypted, because device authentication keys of the others' decryption devices do not match or agree with the decryption device authentication key used in preparing the encryption key.

Once prepared, the decryption device authentication key shall not been changed in the decryption device. Therefore, instead of the decryption device authentication key preparing means, the encryption device authentication key prepared beforehand or once may be stored in the encryption device authentication key storage means.

This decryption device may be an external decryption device detachably coupled to the user's terminal device, and may be, for example, a USB memory, SD memory or an IC card in the same manner as in the above mentioned encryption device. With such an arrangement, when the user detaches the external decryption device from the user's terminal device, others can be prevented from being allowed to use the user's terminal and peep at contents of the cipher text. When the user's external decryption device is attached to the terminal device in the place where the user is staying, the user can decrypt the cipher text.

Moreover, the decryption device authentication key preparing (or storage) means, the attribute information reading means, the authentication key comparing means, the decryption key preparing means and the decryption engine of the decryption device may be implemented as the integrated circuit (LSI or the like) as the logical circuit, and the unique ID for use in preparing the authentication key may be the manufacture number of the integrated circuit or the unique identification information intrinsic in the integrated circuit. These means may be implemented as computer programs.

In yet another aspect, embodiments of the present invention comprise an encryption program executable in an encryption device which encrypts plain text to prepare cipher text allowed to be decrypted only by a specific decryption device. The encryption program includes preparing an encryption key using an encryption device authentication key unique to an encryption device and a decryption device authentication key unique to the decryption device. The encryption device authentication key is prepared using a unique ID of the encryption device, and the decryption device authentication key is prepared using a unique ID of the decryption device. The plain text is converted into the cipher text by use of the encryption key, and the cipher text is attached to attribute information including the encryption device authentication key and the decryption device authentication key.

The encryption computer program may be stored in a computer readable medium usable with a computer processor.

In yet another aspect, embodiments of the present invention comprise a decryption program executable in a decryption device which receives cipher text and attribute information from a specific encryption device and decrypts the cipher text. The cipher text is encrypted by an encryption key prepared using an encryption device authentication key unique to the encryption device and a decryption device authentication key unique to the decryption device. The attribute information includes the encryption device authentication key and the decryption device authentication key which are used in preparing the cipher text to decrypt the cipher text. The decryption program includes comparing the decryption device authentication key attached to the cipher text to determine if a decryption device authentication key which has been prepared or stored in the decryption device using a unique ID of the decryption device matches or agrees with the decryption device authentication key attached to the cipher text. When the decryption device authentication key received from the encryption device agrees with the decryption device authentication key prepared in the encryption device, a decryption key is prepared by use of the decryption device authentication key prepared by or stored in the decryption device and the encryption device authentication key attached to the cipher text. The cipher text is converted into plain text by use of the decryption key.

### BRIEF DESCRIPTION OF THE SEVERAL VIEWS OF THE DRAWINGS

The foregoing summary, as well as the following detailed description of preferred embodiments of the invention, will be better understood when read in conjunction with the appended drawings. For the purpose of illustrating the invention, there are shown in the drawings embodiments which are presently preferred. It should be understood, however, that the invention is not limited to the precise arrangements and instrumentalities shown.
In the drawings:
FIG. 1 is a block diagram of an encrypted data distributing method in accordance with a preferred embodiment of the present invention;
FIG. 2 is a block diagram demonstrating an operation of encryption processing in an encryption device in accordance with a preferred embodiment of the present invention; and
FIG. 3 is a block diagram demonstrating an operation of decryption processing in a decryption device in accordance with a preferred embodiment of the present invention.

### DETAILED DESCRIPTION OF THE INVENTION

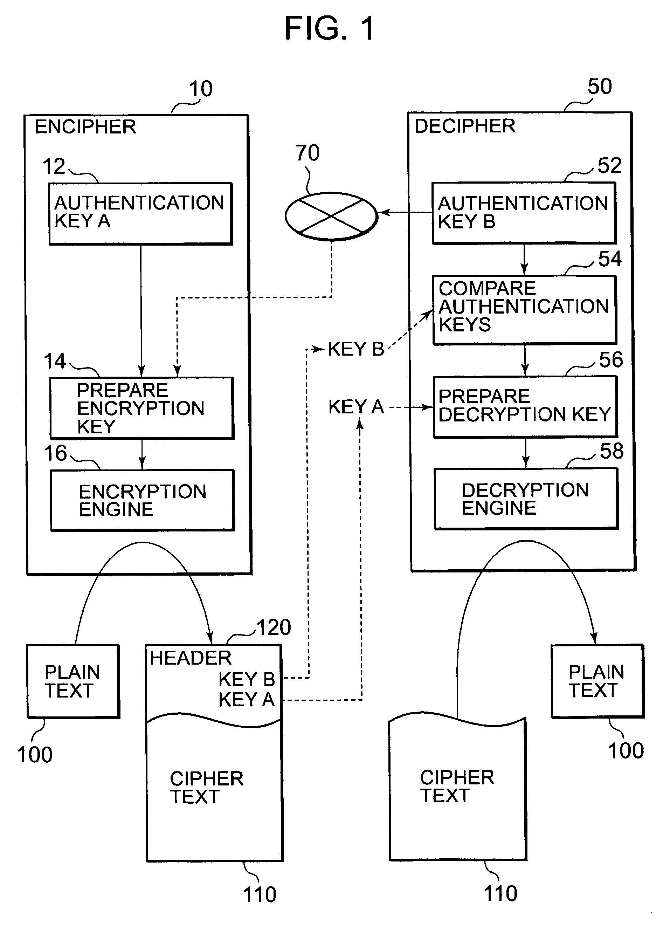

Various embodiments of the present invention will be described heretofore with reference to Figs. 1-3.

Referring to the drawings in detail, wherein like numerals indicate like elements throughout, reference numeral 10 denotes an encryption device, and 50 denotes a decryption device. The encryption device 10 comprises encryption device authentication key preparing means 12, encryption key preparing means 14, and an encryption engine 16. The decryption device 50 comprises decryption device authentication key preparing means 52, encryption key comparing means 54, decryption key preparing means 56, and a decryption engine 58.

The encryption device authentication key preparing means 12 prepares an encryption device authentication key A unique to the encryption device by use of an inherent, intrinsic or unique ID of the encryption device 10. The unique ID is an ID intrinsic in the device or unique machine identifier, and there is used a unique identification code (unique ID) such as a manufacture or product number (serial number) written in a CPU itself or an apparatus identification ID attached for mutually identifying network apparatuses. This unique ID is, for example encrypted and used as an authentication key. A decryption device authentication key B is similarly prepared by the decryption device authentication key preparing means 52 by use of the unique ID of the decryption device 50. These authentication keys A, B are not confidential, and are public keys distributed beforehand to a partner side to which cipher text is mutually sent. Alternatively, the keys may be thrown open to public on a network 70.

During preparation of the cipher text, the encryption device 10 instructs the encryption key preparing means 14 to prepare an encryption key by use of the authentication key A of the device 10 and the opened authentication key B of the partner-side decryption device 50. A plain text 100 is encrypted using the prepared encryption key to prepare cipher text 110, and attribute information or header 120 is attached to the cipher text 110. The authentication key A used in the preparation of the encryption key and the authentication key B of on the partner device 50 are included beforehand in the attribute information 120. The receiver, i.e., partner-side decryption device 50 reads from the header 120 the authentication key B used in the sender encryption device 10, and the encryption key comparing means 54 compares the authentication key B received from the sender device 10 with the authentication key B stored in the decryption device 50 to judge whether or not they are the same. When it is judged that the keys are the same, a decryption key is prepared by the decryption key preparing means 56 by use of the authentication keys A, B, both read from the header 120. Of course, the authentication key B prepared by or stored in the decryption device 50 may also be used, in lieu of the authentication key B received from the encryption device. The prepared decryption key is identical to the encryption key used in the encryption. The cipher text 110 is decrypted into the original plain text 100 by the decryption engine 58 by use of the decryption key.

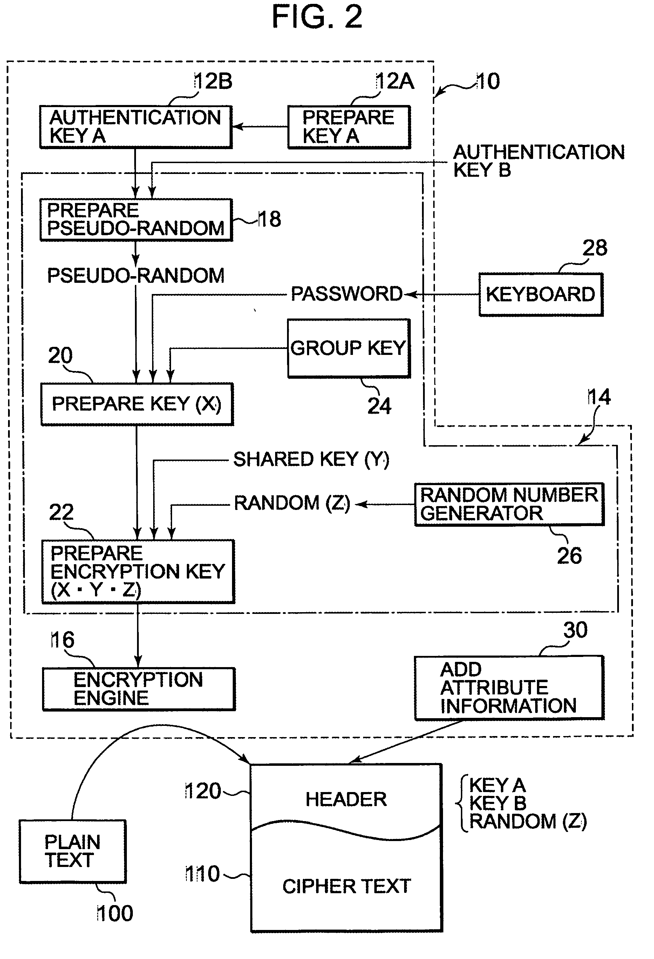

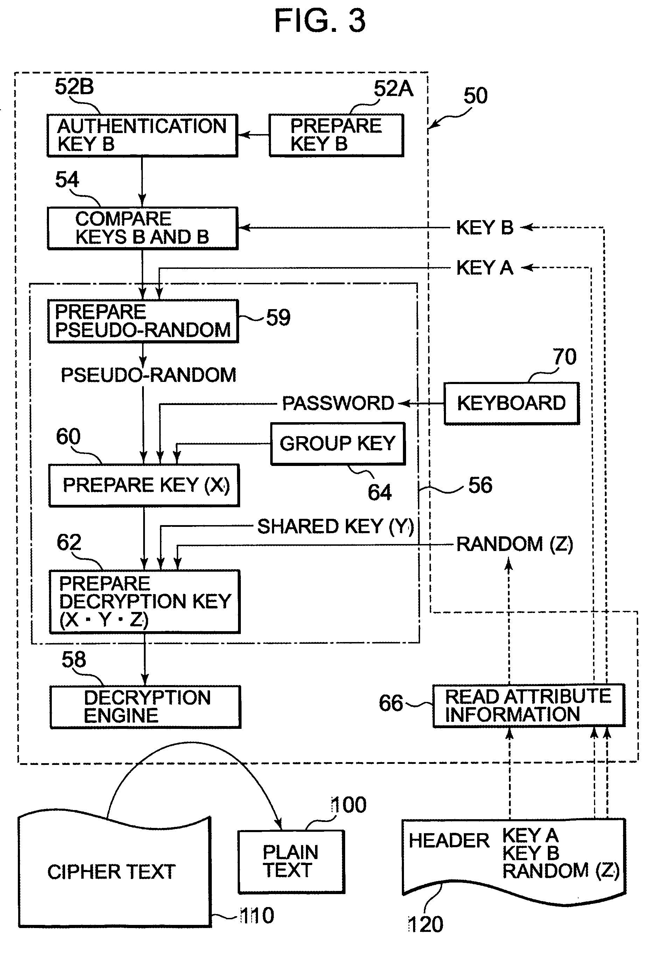

A flow of encryption processing in the encryption device 10 will be described more specifically with reference to FIG. 2. The encryption key preparing means 14 comprises pseudo-random number preparing means 18, key preparing means 20, an encryption key preparing engine 22, group key storage means 24, and a random number generating engine 26. The pseudo-random number preparing means 18 combines the encryption device authentication key A with the decryption device authentication key B to prepare an irreversible pseudo-random number, and a hash function may be used for preparation of the irreversible pseudo-random number. For example, when the authentication key A is represented by a pass phrase "A101", and the authentication key B is represented by a pass phrase "B202", "A101B202" obtained by combining these keys or phrases is processed with the hash function to obtain the pseudo-random number. The resultant pseudo-random number is combined with a password input by external input means 28 such as a keyboard and a group key stored in the group key storage means 24 to prepare a key (X) by the key preparing means 20. This key (X) may be obtained simply by connecting of the pseudo-random number, the password and the group key, or by addition, subtraction, multiplication, and division. The group key is group information for use when an encryption device user and a decryption device user are limited to those who belong to a company or a specific work group. The same group key is stored beforehand in group key storage means 64 of the partner decryption device 50 which belongs to the same group (cf. FIG. 3).

The prepared key (X) is combined with a shared key (Y) and a random number (Z) to prepare an encryption key (X•Y•Z) by the encryption key preparing engine 22. The same shared key (Y) is stored in the partner decryption device 50. Additionally, there is used a random number prepared by the random number generating engine 26 in such a manner that the random number is a different number every time the cipher text is prepared. The encryption key (X•Y•Z) may be obtained simply by connecting X, Y and Z in tandem, or may be prepared by mathematically processing with by an appropriate algorithm.

The plain text 100 is encrypted by the encryption engine 16 using the prepared encryption key (X•Y•Z) to prepare the cipher text 110. Further, attribute information adding means 30 attaches the authentication key A of the encryption device 10, the authentication key B of the decryption device 50 and the random number (Z) as the attribute information 120 to the cipher text 110. The cipher text 110 and the attribute information 120 prepared in this manner are distributed to the decryption device 50. It is to be noted that the attribute information 120 may be a header of the cipher text 110, or may be concealed in the cipher text 110 so that a place where the information is present or the presence of the information itself is not known from a device other than the decryption device.

It is to be noted that once the device authentication key A of the encryption device 10 is prepared, the same authentication key A is constantly used thereafter. Therefore, after the key A is prepared by authentication key preparing means 12A, the key A is stored in encryption device authentication key storage means 12B, and the authentication key preparing means 12A may not be used in the subsequent encryption processing. When the decryption device authentication key A can be prepared beforehand, the authentication key preparing means 12A may be omitted.

Next, a flow of decryption processing in the decryption device 50 will be described with reference to FIG. 3. The decryption key preparing means 56 comprises pseudo-random number preparing means 59, key preparing means 60, a decryption key preparing engine 62, and group key storage means 64. They correspond to the pseudo-random number preparing means 18, the key preparing means 20, the encryption key preparing engine 22, and the group key storage means 24 of the encryption device 10, respectively. The decryption key preparing means 56 is different from the encryption key preparing means 14 only in that any random number generating engine 26 is not used. The decryption engine 58 has an algorithm symmetrical to that of the encryption engine 16. The decryption device 50 is also different from the encryption device 10 in that there are provided encryption key comparing means 54 and attribute information reading means 66.

On receiving the cipher text 110 and the header 120 thereof prepared by the encryption device 10, the decryption device 50 instructs the attribute information reading means 66 to read the encryption device authentication key A and the decryption device authentication key B from the attribute information (header) 120. The encryption key comparing means 54 judges whether or not the authentication key B prepared by authentication key preparing means 52A is identical to the authentication key B contained in the header 120. When both of the authentication keys do not match, the cipher text is not intended to be distributed to the decryption device user, and therefore the subsequent decryption processing is stopped. When both of the authentication keys are the same, it is recognized that the cipher text has been surely distributed to the decryption device user. Therefore, the following decryption processing is performed.

The authentication key B prepared by the authentication key preparing means 52A is combined with the authentication key A of the decryption device read from the header 120 to prepare the pseudo-random number. Since the pseudo-random number preparing means 59 for use is the same as the pseudo-random number preparing means 18 of the encryption device 10, the prepared pseudo-random number is the same as that prepared by the encryption device 10. Thereafter, a key (X) is prepared by the key preparing means 60 by use of a password input from password input means (such as a keyboard) 70 and a group key stored in the group key storage means 64. The attribute information reading means 66 reads the random number (Z) stored in the attribute information (header) 120, and the decryption key preparing engine 62 combines the key (X) with the shared key (Y) and the random number (Z) to prepare a decryption key (X•Y•Z). When the input password is correct, and the group key is the same as that of the encryption device, the finally prepared decryption key is the same as the encryption key, and the cipher text 110 can be decrypted into an original plain text by the decryption engine 58.

Once the authentication key B of the decryption device 50 is prepared, the same authentication key B is constantly used thereafter. Therefore, after the key is prepared by the authentication key preparing means 52A, the key is stored in decryption device authentication key storage means 52B. The authentication key preparing means 52A does not have to be used in the subsequent encryption processing. When the decryption device authentication key B can be prepared beforehand, the authentication key preparing means 52A may be omitted.

The above-described constituting means of the encryption device or the decryption device may be a computer program, or an integrated circuit (IC) such as an LSI implemented as a logical circuit. The encryption device or the decryption device may be an external device detachably coupled to a user's terminal. A storage medium such as a USB memory, an SD memory card, an IC card or the like may be used as the external device, and each constituting means can be a computer program executable in a computer to which the storage memory is attached. Since the encryption engine and the decryption engine utilize a symmetrical algorithm that does not require any complicated processing, high-speed processing is possible even in the external device having a small memory capacity.

Constituting elements of the encryption device and the decryption device may be integrated to constitute an encryption/decryption device. A plain text to be encrypted may be data exchanged between transmitters. For example, when digital content is distributed, the content can be distributed as the cipher text which can be decrypted only by a receiver who has a specific decryption device.

As described above, according to embodiments of the present invention, a common key prepared using a pair of device authentication keys is used as an encryption key and a decryption key. The encryption key is prepared using the encryption device authentication key unique to the encryption device and the decryption device authentication key unique to the decryption device. The encryption device authentication key and the decryption device authentication key are attached, as the attribute information, to the cipher text prepared with the encryption key, and are sent to the decryption device. In the decryption device, the decryption device authentication key included in the attribute information is compared with the authentication key prepared by the decryption device, and the decryption processing is performed only when the keys agree or match. The decryption device authentication key received from the sender encryption device do not match the device authentication key stored in a decryption device other than the corresponding decryption device. Accordingly, it is possible to establish the distribution of the encrypted data which can be decrypted only by the specific partner decryption device. Since the decryption key for use in the decryption processing is the same key as the encryption key, any complicated algorithm of the decryption engine is not required, and high-speed decryption processing is possible. Therefore, the present invention is also suitable for content distribution required to be processed in real time or encryption of a large amount of data.

The various embodiments of the present invention have numerous possible applications. For example, the various embodiments of the present invention can be used for student ID authentication/communication, student grade management/communication, attorney/tax accountant communication/accountant mergers and acquisition cipher communications, aviation radio cipher communication, internet protocol (IP) telephone cipher communication/contents distribution, ubiquitous chip cipher authentication chip for equipment authentication, gas/water/electricity utility meter two-way authentication device, ETC authentication/encryption chip, broadcasting encryption authentication, broadcast contents distribution encryption authentication, soft (electronic) copy guard control/distribution of copyright protection usage, house keys as an authentication key, vehicle keys as an authentication key, building security as an authentication key, electronic publishing of books content distribution, phishing prevention, spoofing prevention, local area network (LAN) cipher communication, wireless LAN cipher communication, cipher point-of-sale (POS) data encryption, electronic money/currency secure authentication and encryption processing by authentication/encryption chip, mobile telephone email encryption, mobile telephone communication with privacy protection, general communication protection, general communication with privacy protection.

One possible implementation includes a "one-in-the-world" internet system for printing specialized authentication paper using a print enablement key. By installing the encryption/decryption system in accordance with the present invention onto the printer and the key, secure distribution and printing of certificates, negotiable securities and coupons can be realized.

Another possible implementation includes security equipment for business systems authentication or a user specific spoofing prevention key. User settlement/authentication over the Internet is made secure by utilizing the encryption/decryption system in accordance with the present invention to achieve authentication between the order form, agreement and the card number.

Another possible implementation of the present invention includes order encryption processing technology such as an EDI/SORP distribution system for order, settlement, authentication, or the like, securely over the Internet. By using encryption/decryption system in accordance with the present invention, cash transactions can be eliminated by means of card key loaded with credit for the purpose of settlement by small-scale local stores.

Another possible implementation of the present invention includes a key-usage period-limit encryption tool system (i.e., a key for limiting the usage time). The system makes it possible to limit the time of access to the contents, without the need for an external certificate authority, by programming the usage period limit in the key itself.

Another possible implementation of the present invention includes a copyright protection system by providing a content usage permission key. The systems makes it possible to prevent improper copying of the content by utilizing the key that can control/cancel the use of copyrights at the time of distribution of software such as computer aided drafting (CAD) software or the like.

Another possible implementation of the present invention includes a system for receiving confidential data such as online medical examination/attorney consultation data by providing a retained consultation key. The system provides secure online exchange of information, such as medical exam/attorney consultation data, that is securely limited among the designated parties.

Another possible implementation of the present invention includes an encryption authentication electronic mail/terminal authentication system such as a specialized communication/internet protocol telephone/e-mail key. By preventing spoofing, the system achieves secure communication between specified parties using secret code.

Another possible implementation of the present invention includes a vending machine authentication purchase key system by using a two-way system authentication maintenance system. The system achieves settlement with spoofing prevention, in which authentication is maintained by executing two-way exchange of cipher texts for two or more times.

Another possible implementation of the present invention includes server batch processing system using an automatic encryption processing between servers. The system achieves encryption/decryption between servers without human involvement.

Another possible implementation of the present invention includes local area network (LAN), wide area network or internet information leakage prevention system within the network. Such a permission data leakage prevention system does not need external authentication, prevents network-internet information leakage.

Another possible implementation of the present invention includes an electronic learning (E-learning) system key. By specifying the users, the contents can be distributed without allowing improper copying, and the encryption processing of students' grades, personal information or the like.

Another possible implementation of the present invention includes electronic information authentication encryption mobile key system using an export key for preventing leakage of important data. Such a system enables secure exportation of data to the outside world.

Another possible implementation of the present invention includes destruction key system using a destruction key for destruction certificate by means of cooperation with certification agencies.) By subjecting the hard disc to authentication encryption in its entirety, the system achieves reversible (restorable) destruction by merely managing the key.

Another possible implementation of the present invention includes site authentication usage system (i.e., a site key). By executing authentication when using a blog, home page or the like, privacy can be protected by encrypting the exchange of information concerning settlement and the like.

Another possible implementation of the present invention includes a satellite hotline system by using a satellite hotline usage chip. By implementing the encryption/decryption system in accordance with the present invention on a satellite and using relay encryption system, spoofing can be prevented.

Another possible implementation of the present invention includes algorithm information encryption authentication communication system for a surveillance unit. Collected data can be managed safely on the Internet using such an algorithm information encryption system.

Another possible implementation of the present invention includes a hardware viewer system such as a DVD/CD-Player installed chip. By utilizing a viewer specialized for hardware, content distribution and charging of fees can be achieved without allowing improper usage.

Another possible implementation of the present invention includes a ubiquitous associated hardware authentication chip system by using chips installed in mobile phone, appliances or the like. By installing encryption/decryption system in accordance with the present invention on mobile phones and home appliances, the system achieves equipment authentication, encrypted distribution of content, charging of fees or the like.

Another possible implementation of the present invention includes a distribution tag, ID tag or the like, using a ubiquitous associated hardware authentication chip system. By installing the encryption/decryption system in accordance with the present invention on an ID tag/distribution tag, the system prevents leakage of information such as the place of origin, distribution price, or the like, by encrypting such information.

Another possible implementation of the present invention includes a security authentication business chip usage system using a spoofing prevention settlement authentication chip. The system achieves equipment authentication that can be used by writing the equipment using electronic lock or Internet.

From the foregoing, it can be seen that the present invention comprises an encryption system using authentication keys and an encrypted data distributing method in which plaintext data is encrypted so that the encrypted data can be decrypted only in a specific decryption device. It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention as defined by the appended claims.

## Claims

1. An encrypted data distributing method comprising:
a) providing an encryption device authentication key unique to an encryption device prepared by use of a unique identification (ID) of the encryption device;
b) providing a decryption device authentication key unique to the specific decryption device prepared by use of a unique ID of the decryption device;
c) in the encryption device,
c-1) preparing an encryption key by use of the encryption device authentication key and the decryption device authentication key;
c-2) encrypting plain text data using the encryption key and sending the resultant cipher text to the decryption device together with attribute information; and
d) in the decryption device,
d-1) comparing the decryption device authentication key received from the encryption device with the decryption device authentication key prepared in the decryption device; and
d-2) preparing, when the decryption device authentication keys match, a decryption key by use of the encryption device authentication key and the decryption device authentication key.

2. The encrypted data distributing method according to claim 1, further comprising
d-3) converting the cipher text into the plain text data by use of the decryption key.

3. The encrypted data distributing method according to claim 1,
wherein the attribute information includes the encryption device authentication key and the decryption device authentication key.

4. The encrypted data distributing method according to claim 1,
wherein the decryption device authentication key used for preparation of the decryption key is the decryption device authentication key contained in the attribute information received from the encryption device.

5. The encrypted data distributing method according to claim 1,
wherein the decryption device authentication key used for preparation of the decryption key is the decryption device authentication key prepared in the decryption device.

6. The encrypted data distributing method according to claim 1,
wherein, in preparing the encryption key, the encryption device authentication key is combined with the decryption device authentication key to prepare an irreversible pseudo-random number, and the encryption key is prepared by use of the pseudo-random number; and
wherein, in preparing the decryption key, the encryption device authentication key is combined with the decryption device authentication key to prepare an irreversible pseudo-random number, and the decryption key is prepared by use of the pseudo-random number.

7. The encrypted data distributing method according to claim 1,
wherein, in preparing the encryption key, a password input in the encryption device is combined with the encryption device authentication key and the decryption device authentication key to prepare the encryption key; and
wherein, in preparing the decryption key, the password input in the decryption device is combined with the encryption device authentication key and the decryption device authentication key to prepare the decryption key.

8. The encrypted data distributing method according to claim 1,
wherein, in preparing the encryption key, a first password input in the encryption device is combined with the encryption device authentication key and the decryption device authentication key to prepare the encryption key, the attribute information of step c-2) includes the first password input through the encryption device;
wherein, in preparing the decryption key, the decryption key is prepared by use of the encryption device authentication key, the decryption device authentication key, and a second password input into the decryption device, when the second password input into the decryption device agrees with the first password in the attribute information received from the encryption device; and
wherein, in preparing the decryption key, the cipher text is prevented from being decrypted into the original plain text data when the first and second passwords do not agree with each other.

9. The encrypted data distributing method according to claim 1,
wherein, in preparing the encryption key, a group key to specify a group to which operators of the encryption device and the decryption device belong is combined with the encryption device authentication key and the decryption device authentication key to prepare the encryption key; and
wherein, in preparing the decryption key, a group key stored in the decryption device is combined with the encryption device authentication key and the decryption device authentication key to prepare the decryption key, so that the cipher text is prevented from being decrypted when the group keys do not agree with each other.

10. The encrypted data distributing method according to claim 1,
wherein, in preparing the encryption key, a shared key shared between the encryption device and the encryption device and a random number is further combined with the encryption device authentication key and the decryption device authentication key to prepare the encryption key;
wherein, in converting the cipher text, the attribute information further includes the random number to provide the random number to the decryption device; and
wherein, in preparing the decryption key, the random number received from the encryption device and the shared key owned by the decryption device is combined with the encryption device authentication key and the decryption device authentication key to prepare the decryption key.

11. The encrypted data distributing method according to claim 1,
wherein the encryption device and the decryption device are servers allowed to transmit/receive the data with each other via a communication network, and the cipher text and the attribute information are distributed from the encryption device to the decryption device via the communication network.

12. An encryption device comprising:
encryption device authentication key preparing means for preparing an encryption device authentication key unique to the encryption device by use of a unique identification (ID) of the encryption device;
encryption key preparing means for preparing an encryption key by use of the encryption device authentication key and a decryption device authentication key of the specific decryption device, the decryption device authentication key being unique to the decryption device and being prepared using a unique ID of the decryption device; and
an encryption engine that converts plain text into cipher text by use of the encryption key.

13. The encryption device according to claim 12, further comprising:
attribute information adding means for adding attribute information to the cipher text, the attribute information including the encryption device authentication key and the decryption device authentication key.

14. The encryption device according to claim 13,
wherein the encryption device is formed as an integrated circuit (IC) and the encryption device authentication key preparing means, the encryption key preparing means, the encryption engine and the attribute information adding means are implemented as a logical circuit within the IC; and
wherein the unique ID of the encryption device is one of a manufacture number of the IC and identification information unique to the IC.

15. The encryption device according to claim 12,
wherein the encryption key preparing means comprises a pseudo-random number preparing engine which combines the encryption device authentication key with the decryption device authentication key to prepare an irreversible pseudo-random number; and
wherein the encryption key is prepared by use of the prepared pseudo-random number.

16. The encryption device according to claim 12,
wherein the encryption device is an external encryption device detachably coupled to a user terminal device.

17. The encryption device according to claim 12,
wherein the encryption device is formed as an integrated circuit (IC) and the encryption device authentication key preparing means, the encryption key preparing means and the encryption engine are implemented as a logical circuit within the IC; and
wherein the unique ID of the encryption device is one of a manufacture number of the IC and identification information unique to the IC.

18. An encryption device comprising:
encryption device authentication key storage means for storing an encryption device authentication key unique to the encryption device, the encryption device authentication key being prepared using a unique identification (ID) of the encryption device;
encryption key preparing means for preparing an encryption key by use of the encryption device authentication key and a decryption device authentication key of the specific decryption device, the decryption device authentication key being unique to the decryption device and being prepared using a unique identification (ID) of the decryption device; and
an encryption engine that converts plain text into cipher text by using the encryption key.

19. The encryption device according to claim 18, further comprising:
attribute information adding means for adding attribute information to the cipher text, the attribute information including the encryption device authentication key and the decryption device authentication key.

20. The encryption device according to claim 19,
wherein the encryption device is formed as an integrated circuit (IC) and the encryption device authentication key storage means, the encryption key preparing means, the encryption engine and the attribute information adding means are implemented as a logical circuit within the IC; and
wherein the unique ID of the encryption device is one of a manufacture number of the IC and identification information unique to the IC.

21. The encryption device according to claim 18,
wherein the encryption device is an external encryption device detachably coupled to a user terminal device.

22. The encryption device according to claim 18,
wherein the encryption device is formed as an integrated circuit (IC) and the encryption device authentication key storage means, the encryption key preparing means and the encryption engine are implemented as a logical circuit within the IC; and
wherein the unique ID of the encryption device is one of a manufacture number of the IC and identification information unique to the IC.

23. A decryption device which receives cipher text and attribute information from a specific encryption device and decrypts the cipher text, the cipher text being prepared by an encryption key which is prepared using an encryption device authentication key unique to the specific encryption device and a decryption device authentication key unique to the decryption device, and attribute information including the encryption device authentication key and the decryption device authentication key used in preparing the encryption key by the encryption device, the decryption device comprising:
decryption device authentication key preparing means for preparing the decryption device authentication key unique to the decryption device by use of a unique identification (ID) of the decryption device;
attribute information reading means for reading, from the attribute information, the encryption device authentication key and the decryption device authentication key used in preparing the encryption key in the encryption device;
authentication key comparing means for comparing the decryption device authentication key read by the attribute information reading means with the decryption device authentication key prepared by the decryption device authentication key preparing means;
decryption key preparing means for preparing a decryption key by use of the encryption device authentication key and the decryption device authentication key; and
a decryption engine that converts the cipher text into plain text by use of the decryption key;
wherein the authentication key comparing means prohibits the decryption engine from being started when the decryption device authentication key attached to the cipher text does not match the decryption device authentication key prepared by the decryption device authentication key preparing means.

24. The decryption device according to claim 23,
wherein the decryption device authentication key used for preparation of the decryption key is the decryption device authentication key contained in the attribute information received from the encryption device.

25. The decryption device according to claim 23,
wherein the decryption device authentication key used for preparation of the decryption key is the decryption device authentication key prepared by the decryption device authentication key preparing means.

26. The decryption device according to claim 23, wherein the decryption key preparing means comprises a pseudo-random number preparing engine which combines the encryption device authentication key with the decryption device authentication key to prepare an irreversible pseudo-random number, and wherein the decryption key preparing means prepares the decryption key by use of the prepared pseudo-random number.

27. The decryption device according to claim 23, wherein the decryption device is implemented as an external decryption device detachably coupled to a user's terminal device.

28. The decryption device according to claim 23,
wherein the decryption device is formed as an integrated circuit (IC) and the decryption device authentication key preparing means, the attribute information reading means, the authentication key comparing means, the decryption key preparing means and the decryption engine are implemented as a logical circuit within the IC; and
wherein the unique ID of the decryption device is one of a manufacture number of the IC and identification information intrinsic in the IC.

29. A decryption device that receives cipher text and attribute information from a specific encryption device and decrypts the cipher text, the cipher text being prepared by an encryption key prepared using an encryption device authentication key unique to the encryption device and a decryption device authentication key unique to the decryption device, and attribute information including the encryption device authentication key and the decryption device authentication key used in preparing the encryption key by the encryption device, the decryption device comprising:
decryption device authentication key storage means for storing the decryption device authentication key unique to the decryption device, the decryption device authentication key being prepared by using a unique identification (ID) of the decryption device;
attribute information reading means for reading, from the attribute information, the encryption device authentication key and the decryption device authentication key used in preparing the encryption key in the encryption device;
authentication key comparing means for comparing the decryption device authentication key read by the attribute information reading means with the decryption authentication key stored in by the decryption device authentication key storage means;
decryption key preparing means for preparing a decryption key by using the encryption device authentication key and the decryption device authentication key; and
a decryption engine that converts the cipher text into plain text by using the decryption key, the authentication key comparing means prohibiting the decryption engine from being started when the decryption device authentication key attached to the cipher text does not match the decryption device authentication key stored in the decryption device authentication key storage means.

30. The decryption device according to claim 29,
wherein the decryption device authentication key used for preparation of the decryption key is the decryption device authentication key contained in the attribute information received from the encryption device.

31. The decryption device according to claim 29,
wherein the decryption device authentication key used for preparation of the decryption key is the decryption device authentication key stored in the decryption device authentication key storage means.

32. The decryption device according to claim 29, wherein the decryption key preparing means comprises a pseudo-random number preparing engine which combines the encryption device authentication key with the decryption device authentication key to prepare an irreversible pseudo-random number; and
wherein the decryption key preparing means prepares the decryption key by use of the prepared pseudo-random number.

33. The decryption device according to claim 29, wherein the decryption device is an external decryption device detachably coupled to a user terminal device.

34. The decryption device according to claim 29, wherein the decryption device is formed as an integrated circuit (IC) and the decryption device authentication key storage means, the attribute information reading means, the authentication key comparing means, the decryption key preparing means, and the decryption engine are implemented as a logical circuit within the IC, and
wherein the unique ID of the decryption device is one of a manufacture number of the IC and identification information intrinsic in the IC.

35. An encryption/decryption device that prepares cipher text to be sent to a partner device for receiving and decrypting the cipher text or which decrypts cipher text prepared by and received from the partner device, the encryption/decryption device comprising:
device authentication key preparing means for combining a unique identification (ID) of the device to prepare a first device authentication key unique to the device;
encryption key preparing means for combining the first device authentication key with a second device authentication key unique to the partner device to prepare an encryption key;
an encryption engine that converts plain text into the cipher text by use of the encryption key;
device authentication key comparing means for comparing the second device authentication key attached to the cipher text prepared by the partner device with the first device authentication key prepared by the authentication key preparing means;
decryption key preparing means for combining the second device authentication key attached to the cipher text with the first device authentication key to prepare a decryption key; and
a decryption engine that converts the cipher text into the plain text by use of the decryption key.

36. An encryption program executable in an encryption device which encrypts plain text to prepare cipher text allowed to be decrypted only by a specific decryption device, the encryption program comprising:
preparing an encryption key using an encryption device authentication key unique to the encryption device and a decryption device authentication key unique to the decryption device, the encryption device authentication key having been prepared using a unique identification (ID) of the encryption device, and the decryption device authentication key having been prepared using a unique ID of the decryption device; and
converting the plain text into the cipher text by use of the encryption key, and attaching to the cipher text attribute information including the encryption device authentication key and the decryption device authentication key.

37. The encryption program according to claim 36, wherein the encryption key is prepared using an irreversible pseudo-random number prepared by combining the encryption device authentication key with the decryption device authentication key.

38. The encryption program according to claim 37, wherein the encryption key is prepared by combining the pseudo-random number with a password input into the encryption device.

39. The encryption program according to claim 37, wherein the encryption key is prepared by combining the pseudo-random number with a group key to specify a group to which operators of the encryption device and a decryption device belong.

40. The encryption program according to claim 37, wherein the encryption key is prepared by combining a shared key shared between the decryption device and the encryption device, a random number and the pseudo-random number; and wherein the attribute information attached to the cipher text includes the random number.

41. The encryption program according to claim 36, further comprising:
preparing the encryption device authentication key using the unique ID of the encryption device;
wherein the encryption key is prepared using the prepared encryption device authentication key and the decryption device authentication key of the partner decryption device.

42. A decryption program executable in a decryption device which receives cipher text and attribute information from a specific encryption device and decrypts the cipher text, the cipher text being prepared by an encryption key prepared using an encryption device authentication key unique to the encryption device and a decryption device authentication key unique to the decryption device, and the attribute information including the encryption device authentication key and the decryption device authentication key which are used in preparing the cipher text, the decryption program comprising:
(a) comparing the decryption device authentication key attached to the cipher text with a decryption device authentication key which has been prepared or stored in the decryption device using a unique identification (ID) of the decryption device;
(b) preparing, when the decryption device authentication key received from the encryption device matches the decryption device authentication key prepared in the decryption device, a decryption key by use of the decryption device authentication key and the encryption device authentication key attached to the cipher text; and
(c) converting the cipher text into plain text by use of the decryption key.

43. The decryption program according to claim 42,
wherein the decryption device authentication key used for preparation of the decryption key in step (b) is the decryption authentication device key attached to the cipher text received from the specific encryption device.

44. The decryption program according to claim 42,
wherein the decryption device authentication key used for preparation of the decryption key in step (b) is the decryption authentication device key prepared by or stored in the decryption device.

45. The decryption program according to claim 42, further comprising:
before comparing the decryption device authentication keys, preparing the decryption device authentication key unique to the decryption device by use of the unique ID of the decryption device.

46. The decryption program according to claim 42, wherein, in step (b), the encryption device authentication key is combined with the decryption device authentication key to prepare an irreversible pseudo-random number, and the decryption key is prepared by use of the pseudo-random number, when the encryption key is prepared using the irreversible pseudo-random number prepared by combining the encryption device authentication key with the decryption device authentication key.

47. The decryption program according to claim 42, wherein, when the cipher text is prepared using the encryption key prepared by combining the encryption device authentication key, the decryption device authentication key and a password input in the encryption device, and when the password is attached to the cipher text, the decryption key is prepared when the password received from the encryption device matches a password input in the decryption device.

48. The decryption program according to claim 42, wherein, when the encryption key is prepared by combining the pseudo-random number with a group key to specify a group to which operators of the encryption device and the decryption device, in step (b), a group key stored in the decryption device is combined with the pseudo-random number to prepare the decryption key, and the cipher text is prevented from being decrypted when the group key stored in the decryption device does not match the group key used for preparation of the cipher text.

49. The decryption program according to claim 42, wherein, when the encryption key is prepared by combining the pseudo-random number, a shared key shared between the encryption device and decryption device, and a random number, and when random number is attached as the attribute information to the cipher text, the decryption key is prepared by combining the shared key stored in the decryption device, a random number read from the attribute information, and the pseudo-random number.
